Europäisches Patentamt

European Patent Office

Office européen des brevets

(11) Publication number: **0 415 120 A2**

# EUROPEAN PATENT APPLICATION

(21) Application number: 90114945.0

(22) Date of filing: 03.08.90

(51) Int. Cl.⁵: **C08F 212/10, C08L 55/02, C08L 35/06**

(30) Priority: 31.08.89 US 401295

(43) Date of publication of application:
06.03.91 Bulletin 91/10

(84) Designated Contracting States:
DE FR GB IT NL

(71) Applicant: GENERAL ELECTRIC COMPANY
1 River Road
Schenectady New York 12305(US)

(72) Inventor: Robison, John C.
401 Spring Meadow Road
Simpsonville, South Carolina 29681(US)
Inventor: Ziegelmeyer, Theresa A.
2112 19th Avenue
Parkersburg, West Virginia 26102(US)

(74) Representative: Catherine, Alain
General Electric France Service de Propriété
Industrielle 18 Rue Horace Vernet
F-92136 Issy-Les-Moulineaux Cedex(FR)

(54) Tetrapolymers and blends thereof with ABS.

(57) A copolymer exhibiting an improved Tg comprises a vinyl aromatic monomer, acrylonitrile, an $\alpha,\beta$-unsaturated dicarboxylic acid anhydride monomer and N-phenyl maleimide. Preferably, the vinyl aromatic monomer is styrene and the $\alpha,\beta$-unsaturated dicarboxylic acid anhydride monomer is maleic anhydride. Blends of the copolymer with ABS resins exhibit good impact strength and heat distortion properties.

EP 0 415 120 A2

## TETRAPOLYMERS AND BLENDS THEREOF WITH ABS

FIELD OF THE INVENTION

The present invention relates to copolymers exhibiting improved glass transition temperatures (Tg) and, more particularly, to tetrapolymers of a vinyl aromatic monomer, acrylonitrile, an $\alpha,\beta$-unsaturated dicarboxylic acid anhydride monomer, and N-phenyl maleimide. The present invention also relates to blends of such copolymers with additional thermoplastic polymers, for example ABS resins.

BACKGROUND OF THE INVENTION

Copolymerizing two or more monomers in an effort to provide a copolymer product having a desired combination of chemical and/or physical properties is known in the art. For example, the Lal U.S. Patent No. 2,916,469 discloses tetrapolymers formed from methacrylic acid, styrene, acrylonitrile and methyl methacrylate which exhibit water-repellant adhesive properties. The Wu et al U.S. Patents Nos. 4,596,856 and 4,603,186 disclose tetrapolymers of acrylonitrile, methyl methacrylate, $\alpha$- methylstyrene and/or styrene and indene which exhibit low inherent viscosities. The Dufour U.S. Patent No. 4,298,716 discloses a tetrapolymer of $\alpha$-methylstyrene, styrene, maleic anhydride and acrylonitrile which is useful in preparing ABS-type polymers. The Taft U.S. Patent No. 3,297,621 discloses additional tetrapolymers formed from an ester of an $\alpha,\beta$-unsaturated carboxylic acid, an ester of an $\alpha,\beta$-unsaturated carboxylic acid in which the ester portion contains an oxirane ring, a monoethylenically unsaturated compound containing a vinyl group, and an unsaturated mono- or di-carboxylic acid or salt thereof. The tetrapolymers are disclosed as suitable for use in preparing clear, high gloss, mar resistant, flexible and solvent resistant polymer films.

Various copolymers including one or more maleimide components are also known in the art. For example, the Dean U.S. Patents Nos. 4,514,543, 4,663,390 and 4,720,525 and the Dean et al U.S. Patent No. 4,749,746 disclose terpolymers formed of styrene, maleic anhydride and N-phenyl maleimide. These terpolymers are disclosed for use in blends with other polymers and copolymers. The Neild U.S. Patent No. 3,676,404, the Lee et al U.S. Patent No. 4,374,951, the Dean U.S. Patent No. 4,701,493 and the Kishida et al U.S. Patent No. 4,757,109 also disclose various terpolymers and tetrapolymers containing maleimides such as N-phenyl maleimide, in combination with one or more of styrene, acrylonitrile and methyl methacrylate. The terpolymers and tetrapolymers are disclosed as having various combinations of physical properties. The Lee-Khac U.S. Patents Nos. 4,605,700 and 4,764,558 disclose terpolymers of N-phenyl maleimide, acrylonitrile and an $\alpha$-olefin or an alkyl vinyl ether. The terpolymers are disclosed as being thermodynamically miscible. Finally, the Nield U.S. Patent No. 3,652,726 discloses a superstrate resin of acrylonitrile, N-phenyl maleimide and styrene which is useful for grafting with a diene rubber substrate.

Ideally, when copolymers are formed from two or more monomer constituents, it is desirable for the copolymer product to exhibit the advantageous characteristics of each of the monomer constituents. Generally however, copolymerization products do not exhibit all of the advantageous properties exhibited by the individual constituent monomers. Accordingly, a continuing need exists for new copolymers exhibiting advantageous combinations of chemical and physical properties.

SUMMARY OF THE INVENTION

It is therefore an object of the present invention to provide a copolymer having an advantageous combination of chemical and physical properties. It is a further object of the invention to provide a copolymer which exhibits a high glass transition temperature and heat distortion temperature, good thermal stability and good tensile strength. It is a further object of the invention to provide a copolymer which may be used alone or in combination with other thermoplastic polymers in various applications.

These and additional objects are provided by the copolymers according to the present invention which comprise a vinyl aromatic monomer, acrylonitrile, an $\alpha,\beta$-unsaturated dicarboxylic acid anhydride monomer, and N-phenyl maleimide. In a preferred embodiment, the tetrapolymers of the present invention comprise styrene, acrylonitrile, maleic anhydride and N-phenyl maleimide. The tetrapolymers of the invention exhibit an advantageous combination of properties. In particular, the tetrapolymers of the invention exhibit good glass transition and heat distortion temperatures, thermal stability and tensile strength. The copolymers of the present invention may be used alone or in combination with one or more additional thermoplastic polymers, for example lu in combination with ABS resins.

These and additional objects and advantages provided by the copolymers and compositions of the invention will be more fully understood in view of the following detailed description.

## DETAILED DESCRIPTION

The copolymers of the present invention are formed from four essential components, namely a vinyl aromatic monomer, acrylonitrile, an $\alpha,\beta$-unsaturated dicarboxylic acid anhydride monomer and N-phenyl maleimide. The present copolymers may contain minor amounts of additional monomers if such monomers do not materially affect the properties of the copolymers containing the four essential components. Although the four essential components may be included in the copolymers of the invention in varying amounts, it is preferred that the copolymers comprise from about 25 to about 80 weight percent of the vinyl aromatic monomer, from about 2 to about 35 weight percent acrylonitrile, from about 2 to about 30 weight percent of the $\alpha,\beta$-unsaturated dicarboxylic acid anhydride monomer, and from about 1 to about 30 weight percent N-phenyl maleimide. More preferably, the copolymers of the invention comprise from about 60 to about 80 weight percent of the vinyl aromatic monomer, from about 5 to about 15 weight percent acrylonitrile, from about 5 to about 15 weight percent of the $\alpha,\beta$-unsaturated dicarboxylic acid anhydride monomer, and from about 1 to about 10 weight percent N-phenyl maleimide.

The vinyl aromatic monomer which is included in the copolymer of the present invention is preferably a monovinyl aromatic monomer, and more preferably comprises styrene, substituted styrene, or mixtures thereof. The substituted styrene monomers suitable for use in the copolymers of the invention are those known in the art and may comprise one or more substituents selected from halogen atoms, alkyl groups having from 1 to about 8 carbon atoms, and the like. Preferred substituted styrene monomers for use in the present polymers comprise methylstyrene and dibromostyrene. The $\alpha,\beta$-unsaturated dicarboxylic acid anhydride monomer which is included in the present copolymers preferably comprises maleic anhydride or a derivative thereof. It is also within the scope of the present invention that the acrylonitrile and N-phenyl maleimide constituents included in the copolymers of the invention may comprise derivatives of acrylonitrile and N-phenyl maleimide, respectively.

The present copolymers may be conveniently formed using bulk polymerization techniques. The polymerization is preferably performed according to bulk polymerization techniques with no solvents or diluents required. Chain transfer agents and/or initiators may be employed in the bulk polymerization process. Other polymerization processes known in the art may also be employed.

The copolymers acccrding to the present invention may be used in various applications alone or in combination with additional thermoplastic polymers. In a preferred embodiment, the copolymers are used in combination with an ABS resin. ABS resins are well known in the art and generally comprise a rubbery polymer substrate to which a rigid copolymer of styrene and acrylonitrile is grafted. Generally, ABS resins will also include free styrene-acrylonitrile copolymer in addition to that which is grafted to the rubbery polymer substrate. Additionally, the styrene and/or acrylonitrile which form the grafting copolymer may be substituted in part or in whole with one or more additional monomers in forming the ABS resin as is well known in the art.

While the ABS resin and the copolymer of the present invention may be blended in varying amounts, it is preferred that the resulting blend compositions comprise from about 10 to about 90 weight percent of the ABS resin and from about 90 to about 10 weight percent of the copolymer of the vinyl aromatic monomer, acrylonitrile, the $\alpha,\beta$-unsaturated dicarboxylic acid anhydride monomer and N-phenyl maleimide. More preferably, the blend compositions comprise from about 10 to about 50 weight percent of the ABS resin and from about 50 to about 90 weight percent of the tetrapolymer. In an additionally preferred embodiment, the ABS resin comprises a high rubber graft ABS containing at least 50 weight percent of the rubbery substrate polymer.

The copolymers and compositions of the present invention are illustrated by the following examples.

## EXAMPLE 1

This example demonstrates various copolymers according to the present invention and compares the copolymers according to the present invention with various copolymers which do not contain the four essential constituents included in the copolymers of the invention. More particularly, Copolymers A-F according to the present invention and Comparative Copolymers G-L were prepared using bulk polymerization techniques in the absence of solvents and diluents. A chain transfer agent comprising n-octyl mercaptan (NOM) was employed. The weight percentages of the styrene, acrylonitrile, maleic anhydride and N-phenyl maleimide monomers employed in the feed for the preparation of each of Copolymers A-L are set forth in Table I. Also set forth in Table I are the parts by weight of chain transfer agent employed in the preparation of each polymer per 100 parts by weight of monomer feed, the polymerization reaction temperature, and the percent total solids at steady state (% TS SS). Copolymers A-L were subjected to measurement of the glass transition temperature (Tg) according to ASTM-D3418-82 and to thermogravometric analysis (TGA), the results of which are also set forth in Table I.

TABLE I

| Copolymer | STY | AN | NPMI | MA | NOM | Reaction Temp, $^{\circ}$C | %TS SS | TGA, 5%, $^{\circ}$C | TGA, 10%, $^{\circ}$C | Tg, $^{\circ}$C |
|---|---|---|---|---|---|---|---|---|---|---|
| A | 79.00 | 10.00 | 1 | 10 | 0.0 | 116 | 50.1 | 334 | 359 | 129 |
| B | 78.00 | 10.00 | 2 | 10 | 0.0 | 116 | 49.7 | 337 | 364 | 131 |
| C | 77.00 | 10.00 | 3 | 10 | 0.0 | 114 | 49.6 | 336 | 360 | 134 |
| D | 76.00 | 10.00 | 4 | 10 | 0.0 | 115 | 48.8 | 334 | 359 | 137 |
| E | 75.00 | 10.00 | 5 | 10 | 0.0 | 114 | 53.6 | 333 | 356 | 139 |
| F | 75.00 | 10.00 | 5 | 10 | 0.02 | 120 | 48.0 | 341 | 362 | 140 |
| G | 75.00 | 25.00 | 0 | 0 | 0.1 | 125 | 57.5 | 373 | 387 | 106 |
| H | 71.25 | 23.75 | 5 | 0 | 0.1 | 120 | 52.2 | 388 | 397 | 113 |
| I | 69.75 | 23.25 | 7 | 0 | 0.1 | 120 | 50.4 | 389 | 399 | 117 |
| J | 68.25 | 22.75 | 9 | 0 | 0.1 | 115 | 49.8 | 385 | 397 | 122 |
| K | 80.00 | 10.00 | 0 | 10 | 0.0 | 116 | 46.3 | 324 | 352 | 125 |
| L | 85.00 | 0 | 5 | 10 | 0.02 | 130 | 50.0 | 347 | 371 | 114,136* |

*Two Tg detected indicating two separate phases in product.

As set forth in Table I, the Copolymers A-F according to the present invention exhibited higher glass transition temperatures as compared with Comparative Copolymers G-L.

EXAMPLE 2

In this example, polymer blend compositions containing the copolymers prepared in Example 1 and an ABS resin were prepared. The compositions contained 75 percent of the respective copolymer from Example 1 and 25 weight percent of the ABS resin. The ABS resin was a high rubber graft comprising styrene-acrylonitrile graft copolymer polymerized to a polybutadiene substrate. The ABS resin comprised 70 weight percent of the polybutadiene. The blend compositions were prepared using a Banbury mixer. The resulting blend compositions were subjected to measurement of Izod impact strength according to ASTM-D256, melt index at 450$^{\circ}$F according to ASTM-D1238, heat distortion temperature according to ASTM-D648 using a 1/2 x 1/8" injection molded, unannealed sample at 264 psi, and yield strength and tensile modulus according to ASTM-D638. The results of these measurements are set forth in Table II.

TABLE II

| Copolymer | Izod Impact (ft-lb/in) | MI @ 450°F | HDT (1/2x1/8, IMU, 264 psi) | Yield Strength (psi) | Tensile Modulus (psix10$^5$) |
|---|---|---|---|---|---|
| A | 3.1 | 1.43 A1 | 207 | 6030 | 3.45 |
| B | 3.3 | .72 B1 | 208 | 5965 | 3.30 |
| C | 3.0 | 1.37 A1 | 220 | 6260 | 3.33 |
| D | 2.9 | .78 A1 | 226 | 6540 | 3.52 |
| E | 3.1 | .73 A1 | 230 | 6945 | 3.46 |
| F | 2.5 | .42 A1 | 220 | 5855 | 3.38 |
| G | 6.8 | .75 A1 | 175 | 5813 | 3.60 |
| H | 4.7 | .92 A1 | 188 | 5875 | 3.61 |
| I | 4.4 | .82 A1 | 190 | 6360 | 3.68 |
| J | 3.9 | .69 A1 | 200 | 6163 | 3.70 |
| K | 3.5 | 1.2 A1/2 | 205 | 5660 | 3.33 |
| L | 0.6 | 1.22 A1 | 212 | 5445 | 3.32 |

The results set forth in Table II demonstrate that the blend compositions according to the present invention containing copolymers A-F, respectively, exhibited a good combination of thermal stability, impact strength and tensile strength, particularly as compared with the comparative compositions including Comparative Copolymers G-L.

The preceding examples are set forth to illustrate specific embodiments of the invention and are not intended to limit the scope of the copolymers and compositions of the present invention. Additional embodiments and advantages within the scope of the claimed invention will be apparent to one of ordinary skill in the art.

**Claims**

1. A copolymer of a vinyl aromatic monomer, acrylonitrile, an $\alpha,\beta$-unsaturated dicarboxylic acid anhydride monomer and N-phenyl maleimide.

2. A copolymer as defined by claim 1, comprising from about 25 to about 80 weight percent of the vinyl aromatic monomer, from about 2 to about 35 weight percent acrylonitrile, from about 2 to about 30 weight percent of the $\alpha,\beta$-unsaturated dicarboxylic acid anhydride monomer and from about 1 to about 30 weight percent N-phenyl maleimide.

3. A copolymer as defined by claim 2, comprising from about 60 to about 80 weight percent of the vinyl aromatic monomer, from about 5 to about 15 weight percent acrylonitrile, from about 5 to about 15 weight percent of the $\alpha,\beta$-unsaturated dicarboxylic acid anhydride monomer, and from about 1 to about 10 weight percent N-phenyl maleimide.

4. A copolymer as defined by claim 1, wherein the vinyl aromatic monomer comprises styrene and the $\alpha,\beta$-unsaturated dicarboxylic acid anhydride comprises maleic anhydride.

5. A copolymer as defined by claim 1 and formed using bulk polymerization techniques.

6. A copolymer as defined by claim 5, wherein said bulk polymerization is conducted in the absence of solvents or diluents.

7. A copolymer as defined by claim 5, wherein said bulk polymerization employs a thermal or peroxide initiator.

8. A polymer blend composition, comprising
   (a) an ABS resin, and
   (b) A copolymer of a vinyl aromatic monomer, acrylonitrile, an $\alpha,\beta$-unsaturated dicarboxylic acid anhydride and N-phenyl maleimide.

9. A polymer blend composition as defined by claim 8, comprising
   (a) from about 10 to about 90 weight percent of the ABS resin, and
   (b) from about 90 to about 10 weight percent of the copolymer.

10. A polymer blend composition as defined by claim 9, comprising
   (a) from about 10 to about 50 weight percent of the ABS resin, and

(b) from about 50 to about 90 weight percent of the copolymer.

11. A polymer blend composition as defined by claim 8, wherein the ABS resin comprises at least 50 weight percent of a rubbery substrate polymer.

12. A polymer blend composition, comprising

(a) an ABS resin, and

(b) a copolymer of styrene, acrylonitrile, maleic anhydride and N-phenyl maleimide.